(19) **Europäisches Patentamt**

**European Patent Office**

**Office européen des brevets**

(11) **EP 0 950 605 B1**

(12) **FASCICULE DE BREVET EUROPEEN**

(45) Date de publication et mention
de la délivrance du brevet:
**03.12.2003 Bulletin 2003/49**

(51) Int Cl.⁷: $B63H\ 21/30$, $F16F\ 15/00$

(21) Numéro de dépôt: **99400926.4**

(22) Date de dépôt: **15.04.1999**

(54) **Dispositif pour réduire les vibrations sur un bateau**

Vorrichtung zur Verminderung von Vibrationen auf einem Schiff

Arrangement to reduce vibrations on a ship

(84) Etats contractants désignés:
**BE DE ES FI FR GB GR NL PT SE**

(30) Priorité: **16.04.1998 FR 9804752**

(43) Date de publication de la demande:
**20.10.1999 Bulletin 1999/42**

(73) Titulaire: **Alstom Entreprise SA**
**92300 Levallois Perret (FR)**

(72) Inventeurs:
• **Huot-Marchand, Jean-Pierre**
**90350 Evette Salbert (FR)**
• **Nicod, Jean-Philippe**
**90000 Belfort (FR)**

(74) Mandataire:
**de Lambilly Delorme, Marie Pierre et al**
**ALSTOM**
**Intellectual Property Department**
**25, Avenue Kléber**
**75116 Paris (FR)**

(56) Documents cités:
**US-A- 5 049 795**      **US-A- 5 355 732**

**Description**

La présente invention concerne un dispositif pour réduire les vibrations sur un bateau pourvu de deux arbres de propulsion.

Une préoccupation constante consiste à rechercher le silence acoustique sur les bateaux. En effet, pour un paquebot, il s'agit d'améliorer le confort des passagers tandis que sur les navires à vocation scientifique ou sur les bâtiments militaires, le silence est une contrainte d'exploitation.

Un dispositif actif de réduction des vibrations imposées sur un systéme, avec les caractéristiques du preamble de la revendication indépendante est décrit dans le document US 5 049 795.

Il convient donc de réduire les vibrations acoustiques engendrées par la compression de l'eau sur les coques du fait de la rotation des hélices. On se place dans le cas où le bateau est mû par au moins deux arbres de propulsion chacun pourvu d'une hélice.

Il est ainsi connu d'équiper chacun des deux arbres d'un navire avec un codeur de position angulaire et de réguler par ce moyen la vitesse de rotation de ces arbres de sorte qu'ils présentent un écart angulaire fixé à une valeur de consigne constante. Cette consigne résulte de considérations mécaniques sur les interactions entre les hélices, l'eau et la coque, et ces considérations sont affectées d'une certaine imprécision. De plus, ces interactions dépendent étroitement des conditions de fonctionnement du navire. Au nombre de ces conditions on citera notamment la puissance développée sur un arbre de propulsion, la vitesse de rotation, la charge du navire, la vitesse d'avancement de ce navire, la température et la salinité de l'eau.

Il s'ensuit que le calcul de la consigne est d'une grande complexité. Par ailleurs, le fait d'adopter une consigne constante conduit nécessairement à opter pour un compromis, si bien que cette consigne n'est pas toujours optimisée pour les conditions de fonctionnement de ce navire dans une situation donnée.

La présente invention a ainsi pour objet un dispositif pour réduire les vibrations qui ne supporte pas les contraintes ou les limitations évoquées ci-dessus.

Selon l'invention, ce dispositif adapté à un bateau pourvu d'au moins deux arbres de propulsion comporte des moyens d'asservissement de l'écart angulaire des deux arbres sur une consigne ; il comprend de plus des moyens de calibration pour rechercher un décalage angulaire optimal entre ces arbres qui correspond à un minimum de vibrations, et des moyens de commande pour actionner successivement, en réponse à un signal de commande, les moyens de calibration puis les moyens d'asservissement en fixant comme consigne ce décalage angulaire optimal.

Ainsi, pour des conditions de fonctionnement données, ou rechercher le décalage angulaire optimal qui conduit à un minimum de vibrations avant de procéder à un asservissement classique.

L'invention trouve une application avantageuse lorsque les arbres de propulsion sont animés par des moteurs électriques. Dans ce cas, le dispositif comprend des moyens de mesure pour dériver l'écart angulaire des paramètres d'alimentation de ces moteurs.

Cela permet de s'affranchir des codeurs de position sur les arbres.

Selon une première option, le décalage angulaire optimal est détecté à l'oreille.

Selon une seconde option, le dispositif comprend de plus un capteur de vibrations pour détecter le décalage angulaire optimal.

On peut alors prévoir dans le dispositif une chaîne de régulation pour produire un signal de régulation qui représente les variations du niveau de vibrations, les moyens de commande fixant comme consigne ce signal de régulation postérieurement au décalage angulaire optimal.

De préférence, le signal de régulation représente la dérivée du niveau fondamental des vibrations.

Quel que soit le mode de réalisation adopté, une solution simple consiste à opter pour un actionnement manuel du signal de commande.

Par ailleurs, il est intéressant de concevoir le dispositif de sorte que le signal de commande soit actionné suite à une modification des conditions de fonctionnement du bateau.

En particulier, cette modification concerne soit la vitesse de rotation, soit la puissance transmise à l'un des arbres.

D'autres avantages et caractéristiques de la présente invention apparaîtront de manière plus détaillée dans le cadre de la description qui suit d'exemples de réalisation donnés à titre d'exemple en référence aux figures annexées qui représentent :

- la figure 1, une vue schématique d'un mode de réalisation du dispositif de l'invention,
- la figure 2, une représentation symbolique d'une chaîne de régulation selon l'invention,
- la figure 3, un schéma d'implémentation analogique adapté à la mise en oeuvre de la phase de régulation du dispositif.

Les éléments présents dans plusieurs figures sont affectés d'une seule et même référence.

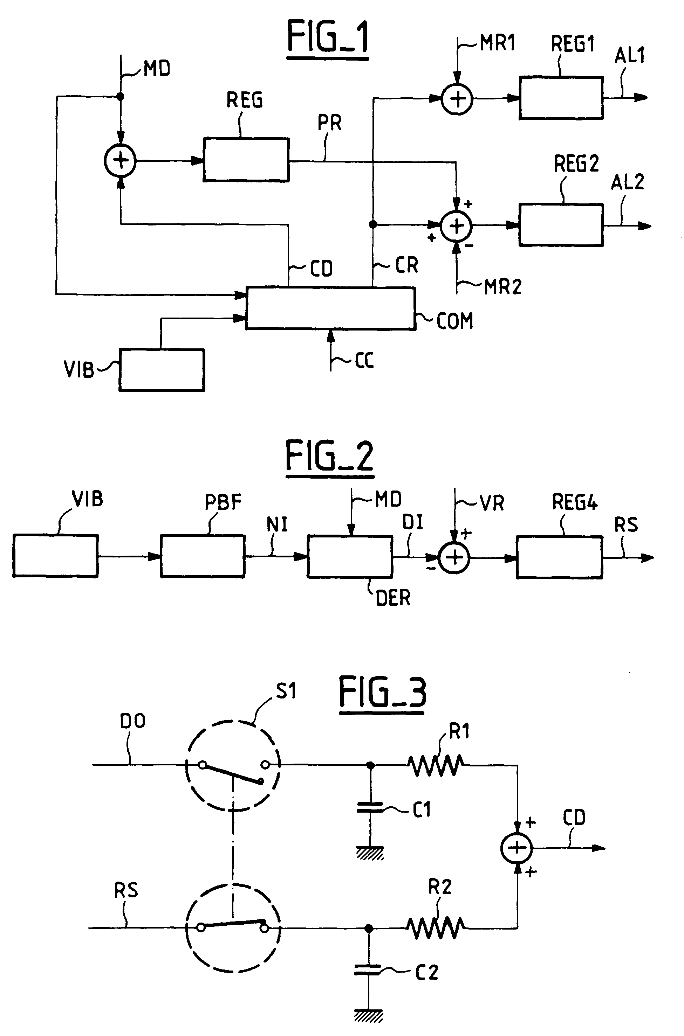

En référence à la figure 1, le dispositif comprend un circuit de commande COM qui reçoit les différentes informations pertinentes et commande les autres organes de la manière décrite ci-après. Il s'agit par exemple d'un microprocesseur.

Un premier régulateur REG1 régule la vitesse de rotation d'un premier arbre de propulsion en produisant un premier signal d'alimentation AL1 à destination du moteur d'entraînement de ce arbre. Il reçoit en entrée la différence entre une consigne de vitesse de rotation CR fournie par le circuit de commande COM et la vitesse de rotation mesurée MR1 de cet arbre.

Un deuxième régulateur REG2 régule la vitesse de rotation d'un deuxième arbre de propulsion en produisant un deuxième signal d'alimentation AL2 à destination du moteur d'entraînement de ce arbre. Il reçoit en entrée la différence entre, d'une part, la somme de la consigne de vitesse de rotation CR et d'un signal de positionnement relatif PR et, d'autre part, la vitesse de rotation MR2 de ce deuxième arbre.

Le signal de positionnement relatif PR est produit par un troisième régulateur REG3, de type proportionnel intégral par exemple, qui reçoit en entrée la différence d'une consigne de décalage angulaire CD issue du circuit de commande COM et de l'écart angulaire mesuré MD entre les deux arbres de propulsion.

Les signaux de mesure MR1, MR2, MD relatifs à la vitesse de rotation des arbres ou à leur écart angulaire peuvent être obtenus au moyen de codeurs de position disposés sur ces arbres.

Cependant, dans la plupart des cas, l'entraînement des arbres est réalisé par des moteurs électriques. Il est alors judicieux d'acquérir ces différentes mesures en utilisant les paramètres d'alimentation de ces moteurs tels que fréquence, tension et courant du stator et rotor, ou encore commande des thyristors lorsque de tels composants sont employés pour alimenter les moteurs. Il s'agit là d'une technique connue de l'homme du métier qui ne sera donc pas plus détaillée.

Dans une première phase de calibration, en réponse à un signal de commande CC, le circuit de commande COM produit une rampe comme consigne de décalage angulaire CD de sorte que l'écart angulaire mesuré MD soit progressivement augmenté de 360°. Lorsqu'un minimum de vibrations est détecté, le circuit de commande mémorise la valeur correspondante de l'écart angulaire qui représente alors un décalage optimal DO.

Le minimum de vibrations peut être détecté à l'oreille, par un homme d'expérience.

Il peut également être mesuré au moyen d'un capteur de vibrations VIB. Une solution avantageuse consiste alors à retenir comme niveau de vibrations l'amplitude de la fréquence fondamentale de ces vibrations. En enregistrant un relevé du niveau de vibrations en fonction de l'écart angulaire sur 360°, il est alors aisé de rechercher la valeur minimale de ce niveau et d'identifier le décalage optimal DO correspondant.

Cette première phase peut éventuellement être répétée une ou plusieurs fois de manière à améliorer la précision, ceci en prenant la valeur moyenne des différents niveaux pour un décalage donné. Là encore, il s'agit d'une technique très répandue qui ne sera pas plus décrite.

Ensuite, dans une deuxième phase dite phase d'asservissement, le circuit de commande COM produit la valeur de ce décalage optimal DO comme consigne de décalage angulaire CD. Il s'ensuit que les deux arbres de propulsion sont asservis de sorte qu'ils présentent un écart angulaire égal au décalage optimal.

On remarquera que le signal de commande CC peut être produit manuellement par du personnel qualifié, le commandant de bord par exemple. Mais ce signal peut également être produit automatiquement lorsque certaines conditions de fonctionnement sont modifiées, ne serait-ce que la consigne de vitesse de rotation CR ou la puissance fournie à un moteur d'entraînement.

Au cours de la phase d'asservissement, les deux arbres sont donc asservis en écart angulaire sur une valeur constante qui correspond à un minimum de vibrations pour les conditions de fonctionnement présentes lors de la phase de calibration.

Bien que cet asservissement apporte une amélioration sensible par rapport à l'état de l'art, il s'avère que les conditions de fonctionnement peuvent évoluer durant la phase d'asservissement de sorte qu'il n'est pas garanti que le décalage optimal acquis pendant la phase de calibration soit encore le même quelques temps plus tard.

Une solution à ce problème consisterait à produire le signal de commande de temps à autre, manuellement ou automatiquement, de manière à ce que la phase de calibration soit périodiquement renouvelée.

Toutefois, l'invention propose une troisième phase dite phase de régulation durant laquelle le décalage optimal est actualisé en permanence au moyen d'une chaîne de régulation.

En référence à la figure 2, le capteur de vibrations VIB est suivi d'un module de filtrage PBF qui isole la composante fondamentale du signal de sortie du capteur et produit un signal de niveau NI représentatif de l'amplitude de cette composante.

Un module de dérivation DER est prévu pour réaliser une fonction de dérivation du signal de niveau NI par rapport à l'écart angulaire mesuré MD. Il s'agit en effet de faire une régulation sur un minimum, la valeur minimale du signal de niveau NI, et une des méthodes possibles consiste à prendre le dérivée de la fonction pertinente et à réguler par rapport à une valeur de référence VR égale à zéro.

Selon un premier mode de réalisation, le module de dérivation effectue la dérivée temporelle dNI du signal de niveau NI, la dérivée temporelle dMD de l'écart angulaire mesuré MD et produit un signal de dérivation DI égal au rapport de la première à la seconde dérivée DNI/dMD.

Selon un deuxième mode de réalisation, on peut adopter une représentation discrétisée des différentes variables où i représente l'incrément temporel et, en indexant ces variables par le temps discrétisé i, on peut calculer le signal de dérivation DI au moyen dé l'expression suivante :

$$DI_i = \frac{NI_i - NI_{i-1}}{MD_i - MD_{i-1}}$$

Naturellement bien d'autres modes de réalisation sont disponibles et il n'est pas possible de les représenter ici de manière exhaustive. Le point important est de déterminer le signe du signal de dérivation DI, un moyen simple consistant à évaluer le sens de variation de l'écart angulaire mesuré MD.

Un quatrième régulateur REG4, de type proportionnel par exemple, reçoit en entrée la différence de la valeur de référence VR (égale à zéro par hypothèse) et du signal de dérivation DI pour produire un signal de régulation RS.

Ainsi, peu après la phase d'asservissement, le circuit de commande COM enclenche la phase de régulation durant laquelle la consigne de décalage angulaire CD va passer progressivement de la valeur de décalage optimal DO acquis durant la phase de calibration à la valeur du signal de régulation RS. Ce résultat peut être obtenu en produisant comme consigne de décalage CD une fonction F du type F=a(t)xDO+b(t)xRS où a(t) tend vers zéro et b(t) tend vers une constante lorsque t tend vers l'infini. Un cas particulier intéressant consiste à fixer b(t)=1-a(t). Il est possible de réaliser cette fonction de manière numérique au sein du circuit de commande.

En référence à la figure 3, il est également possible de la réaliser de manière analogique. On prévoit ici un premier S1 et un deuxième S2 interrupteurs commandés en synchronisme de sorte que l'ouverture du premier S1 coïncide avec la fermeture du second S2.

Le premier interrupteur S1 recevant d'une part le décalage optimal DO est raccordé d'autre part aux premières bornes d'un premier condensateur C1 et d'une première résistance R1. La deuxième borne du premier condensateur C1 est raccordée à la masse tandis que celle de la première résistance R1 est injectée sur une entrée d'un circuit d'addition SUM.

Le deuxième interrupteur S2 recevant d'une part le signal de régulation RS est d'autre part raccordé aux premières bornes d'un deuxième condensateur C2 et d'une deuxième résistance R2. La deuxième borne du deuxième condensateur C2 est raccordée à la masse tandis que celle de la deuxième résistance R2 est injectée sur une autre entrée du circuit d'addition SUM.

La sortie de ce circuit d'addition donne la consigne de décalage angulaire CD qu'il convient d'appliquer.

Lors du passage de la phase d'asservissement à la phase de régulation le circuit de commande inverse le premier S1 respectivement le deuxième S2 interrupteur qui passent de l'état fermé respectivement ouvert à l'état ouvert respectivement fermé.

L'invention n'est pas limitée aux implémentations présentées ci-dessus. En particulier, il est possible de remplacer tout moyen par un moyen équivalent.

## Revendications

1. Dispositif pour réduire les vibrations sur un bateau pourvu d'au moins deux arbres de propulsion comportant des moyens d'asservissement (REG1, REG2, REG3) de l'écart angulaire (MD) desdits deux arbres au moins sur une consigne (CD), **caractérisé en ce qu'**il comprend des moyens de calibration pour rechercher un décalage angulaire optimal (DO) entre ces arbres qui correspond à un minimum de vibrations, et des moyens de commande (COM) pour actionner successivement, en réponse à un signal de commande (CC), lesdits moyens de calibration puis lesdits moyens d'asservissement en fixant comme consigne (CD) ledit décalage angulaire optimal (DO).

2. Dispositif selon la revendication 1 **caractérisé en ce que**, lesdits arbres étant entraînés par des moteurs électriques, il comprend des moyens de mesure pour dériver ledit écart angulaire (MD) des paramètres d'alimentation desdits moteurs.

3. Dispositif selon l'une quelconque des revendications 1 et 2, **caractérisé en ce que** ledit décalage angulaire optimal (DO) est détecté à l'oreille.

4. Dispositif selon l'une quelconque des revendications 1 et 2, **caractérisé en ce qu'**il comprend de plus un capteur de vibrations (VIB) pour détecter ledit décalage angulaire optimal (DO).

5. Dispositif selon la revendication 4, **caractérisé en ce qu'**il comprend une chaîne de régulation (PBF, DER, REG4) pour produire un signal de régulation (RS) qui représente les variations du niveau de vibrations, lesdits moyens de commande (COM) fixant comme consigne (CD) ledit signal de régulation (RS) postérieurement audit décalage angulaire optimal (DO).

6. Dispositif selon la revendication 5, **caractérisé en ce que** ledit signal de régulation (RS) représente la dérivée du niveau fondamental des vibrations.

7. Dispositif selon l'une quelconque des revendications précédentes, **caractérisé en ce que** ledit signal de commande (CC) est actionné manuellement.

8. Dispositif selon l'une quelconque des revendications précédentes, **caractérisé en ce que** ledit signal de commande (CC) est actionné suite à une modification des conditions de fonctionnement du bateau.

9. Dispositif selon la revendication 8, **caractérisé en ce que** ladite modification concerne soit la vitesse de rotation, soit la puissance transmise à l'un desdits arbres.

**Patentansprüche**

1.  Vorrichtung zum Vermindern der Vibrationen auf einem mit wenigstens zwei Antriebswellen ausgerüsteten Schiff, mit Mitteln (REG1, REG2, REG3) zur Nachführung der Winkelabweichung (MD) der Wellen wenigstens auf einen Sollwert (CD), **dadurch gekennzeichnet, dass** sie Kalibriermittel zum Auffinden einer optimalen Winkelverschiebung (DO) zwischen diesen Wellen, welche einem Minimum der Vibrationen entspricht, und Steuermittel (COM), um als Antwort auf ein Steuersignal (CC) die Kalibriermittel und anschließend die Nachführmittel sukzessiv zu betätigen, wobei als Sollwert (CD) die optimale Winkelverschiebung (DO) festgelegt wird, umfasst.

2.  Vorrichtung nach Anspruch 1, **dadurch gekennzeichnet, dass** sie, wenn die Wellen von Elektromotoren angetrieben werden, Messmittel umfasst, um die Winkelabweichung (MD) von Versorgungsparametern der Motoren abzuleiten.

3.  Vorrichtung nach einem der Ansprüche 1 und 2, **dadurch gekennzeichnet, dass** die optimale Winkelverschiebung (DO) mit dem Gehör erfasst wird.

4.  Vorrichtung nach einem der Ansprüche 1 und 2, **dadurch gekennzeichnet, dass** sie zudem einen Vibrationsaufnehmer (VIB) zum Erfassen der optimalen Winkelverschiebung (DO) umfasst.

5.  Vorrichtung nach Anspruch 4, **dadurch gekennzeichnet, dass** sie eine Regelkette (PBF, DER, REG4) zum Erzeugen eines die Variationen der Höhe der Vibrationen darstellenden Regelsignals (RS) umfasst, wobei die Steuermittel (COM) das Regelsignal (RS) nach der optimalen Winkelverschiebung (DO) als Sollwert (CD) festlegen.

6.  Vorrichtung nach Anspruch 5, **dadurch gekennzeichnet, dass** das Regelsignal (RS) die Ableitung der Grundhöhe der Vibrationen darstellt.

7.  Vorrichtung nach einem der vorhergehenden Ansprüche, **dadurch gekennzeichnet, dass** das Steuersignal (CC) manuell betätigt wird.

8.  Vorrichtung nach einem der vorhergehenden Ansprüche. **dadurch gekennzeichnet, dass** das Steuersignal (CC)in Bezug auf eine Änderung der Funktionsbedingungen des Schiffs betätigt wird.

9.  Vorrichtung nach Anspruch 8, **dadurch gekenn-**

**zeichnet, dass** die Änderung entweder die Drehgeschwindigkeit oder die auf eine der Wellen übertragene Leistung betrifft.

**Claims**

1.  Apparatus for reducing vibration on a ship provided with at least two drive shafts, the apparatus comprising servo-control means (REG1, REG2, REG3) for servo-controlling the angular difference (MD) of said two shafts at least on a reference value (CD), the apparatus being **characterized in that** it further comprises calibration means for finding an optimum angular offset (DO) between the shafts which corresponds to a vibration minimum, and control means (COM) for responding to a control signal (CC) to actuate in succession said calibration means and then said servo-control means, with said optimum angular offset (DO) being fixed as the reference value (CD).

2.  Apparatus according to claim 1, **characterized in that**, said shafts being driven by electric motors, the apparatus has measurement means for deriving said angular difference (MD) from power supply parameters of said motors.

3.  Apparatus according to claim 1 or 2, **characterized in that** said optimum angular offset (DO) is detected by ear.

4.  Apparatus according to claim 1 or 2, **characterized in that** it further includes a vibration sensor (VIB) for detecting said optimum angular offset (DO).

5.  Apparatus according to claim 4, **characterized in that** it comprises a regulation system (PBF, DER, REG4) for producing a regulation signal (RS) representative of variations in vibration level, said control means (COM) fixing this regulation signal (RS) as the reference value (CD) after fixing said optimum angular offset (DO).

6.  Apparatus according to claim 5, **characterized in that** said regulation signal (RS) represents the derivative of the fundamental level of the vibrations.

7.  Apparatus according to any preceding claim, **characterized in that** said control signal (CC) is manually actuated.

8.  Apparatus according to any preceding claim, **characterized in that** said control signal (CC) is actuated following a modification to the operating conditions of the ship.

9.  Apparatus according to claim 8, **characterized in**

**that** said modification relates either to the speed of rotation or to the power transmitted by one of said shafts.

## FIG_1

## FIG_2

## FIG_3